(19) **Europäisches Patentamt / European Patent Office / Office européen des brevets**

(11) **EP 3 457 096 B1**

(12) **FASCICULE DE BREVET EUROPEEN**

(45) Date de publication et mention de la délivrance du brevet:
**07.07.2021 Bulletin 2021/27**

(51) Int Cl.:
**G01F 23/26** *(2006.01)* **G01F 25/00** *(2006.01)*

(21) Numéro de dépôt: **18193691.5**

(22) Date de dépôt: **11.09.2018**

(54) **SONDE AMÉLIORÉE POUR DISPOSITIF LIMITEUR DE REMPLISSAGE POUR CITERNE DE TRANSPORT DE CARBURANT PÉTROLIER ET DISPOSITIF LIMITEUR DE REMPLISSAGE CORRESPONDANT**

VERBESSERTE SONDE FÜR FÜLLBEGRENZUNGSVORRICHTUNG FÜR TRANSPORTZISTERNE FÜR KRAFTSTOFF AUF ERDÖLBASIS, UND ENTSPRECHENDE FÜLLBEGRENZUNGSVORRICHTUNG

IMPROVED PROBE FOR FILL LIMITING DEVICE FOR PETROLEUM FUEL TRANSPORT TANK AND CORRESPONDING FILL LIMITING DEVICE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **13.09.2017 FR 1758479**
**16.01.2018 FR 1850350**

(43) Date de publication de la demande:
**20.03.2019 Bulletin 2019/12**

(73) Titulaire: **INTERSENS**
**75008 Paris (FR)**

(72) Inventeur: **MOREL-FATIO, Bruno**
**75008 PARIS (FR)**

(74) Mandataire: **Casalonga**
**Casalonga & Partners**
**Bayerstraße 71/73**
**80335 München (DE)**

(56) Documents cités:
**WO-A1-2014/136071**    **DE-A1- 4 115 207**
**FR-A1- 2 339 895**    **FR-A1- 2 851 653**
**FR-A1- 3 040 484**    **US-A1- 2008 297 177**
**US-A1- 2012 065 904**    **US-B1- 8 810 260**

## Description

La présente invention concerne, de manière générale, le transport de carburants pétroliers liquides et se rapporte plus particulièrement aux dispositifs limiteurs de remplissage pour citerne de transport de carburant pétrolier liquide.

L'invention a en particulier pour objet un dispositif antidébordement qui est destiné à être mis en œuvre lors du remplissage de citernes.

Au niveau mondial, la grande majorité de tels dispositifs doivent répondre à la norme européenne CEN « EN 13922 » qui permet notamment de garantir l'interopérabilité entre les sondes du véhicule citerne et le dispositif de chargement. Pour éviter des débordements de matières dangereuses explosibles lors de la phase de remplissage, une sonde est placée dans la partie supérieure de chaque compartiment du véhicule citerne. Cette sonde change d'état dès qu'elle est mouillée. Elle est raccordée au dispositif de chargement afin que ce dernier stoppe immédiatement le processus de remplissage dès que le mouillage est détecté.

Dans le but de limiter le remplissage, il a tout d'abord été proposé d'utiliser des sondes fondées sur la mise en œuvre d'une thermistance qui permet de détecter un différentiel de températures lors de la mise en contact de la sonde avec le produit.

La demande de brevet allemand DE 41 15 207 A1 décrit une telle sonde de l'état de l'art antérieur basée sur l'utilisation de thermistances ou d'éléments capacitifs.

Il a été toutefois constaté que ce type de technologie à base de thermistance était trop fragile et conduisait à des remplacements trop fréquents des sondes.

Il a par ailleurs été proposé de détecter le niveau de carburant de chaque compartiment du véhicule citerne, lors de son remplissage, en utilisant des sondes fondées sur un principe optique de variation de l'angle de réfraction d'un faisceau lumineux. Ces sondes utilisent un cône en matière transparente, par exemple en polypropylène, qui réfléchit un faisceau lumineux non divergent émis par une diode électroluminescente et comportant un récepteur qui détecte la lumière réfléchie. Le cône est positionné à un niveau de détection de débordement. Ainsi lorsque le niveau de liquide atteint le niveau de détection de la sonde, l'indice de réfraction du cône est modifié et la lumière n'est plus détectée.

Ce type de technologie souffre toutefois de nombreux inconvénients.

En premier lieu, l'angle de réfraction du faisceau lumineux dépend d'une très faible surface de contact, qui reçoit le faisceau lumineux, de l'ordre de quelques mm de diamètre. Si, par exemple, une bulle est présente au niveau de ce point de contact, la direction du faisceau s'en trouve perturbée.

En second lieu, le faisceau lumineux peut être réfléchi de manière non maîtrisée par des surfaces métalliques au sein du compartiment. Par exemple, des dispositifs de dispersion de faisceau lumineux ont dû être récemment ajoutés en fond de gaine de protection antifraude pour éviter les réflexions parasites sur ces gaines.

Il a par ailleurs été constaté que les caractéristiques optiques du cône transparent tendent à se dégrader dans le temps, par exemple par opacification ou par apparition de micro fentes, de sorte qu'avec le temps la fonction du cône transparent tend à se dégrader.

De plus, l'énergie lumineuse des diodes électroluminescentes diminue avec le temps et avec l'élévation de la température. Ce phénomène est bien connu des constructeurs de sondes optiques. Lorsque la température dépasse les 60°C le bon fonctionnement n'est plus garanti et la durée de vie du produit est écourtée.

Enfin, l'énergie nécessaire à l'émission d'un faisceau lumineux par une diode électroluminescente est intrinsèquement élevée, difficilement compatible avec les contraintes de « sécurité intrinsèque » requises dans des environnements d'atmosphère explosible qui limitent l'énergie électrique à des niveaux extrêmement bas afin de garantir l'absence d'étincelles et de points d'échauffement. Une intensité lumineuse suffisante est difficile à obtenir, en particulier lorsque les performances des diodes sont dégradées.

Le but de l'invention est de proposer une sonde pour dispositif limiteur de remplissage pour citerne de transport de carburant pétrolier liquide qui pallie ces divers inconvénients.

L'invention a donc pour objet, selon un premier aspect, une sonde pour dispositif limiteur de remplissage pour citerne de transport de carburant pétrolier liquide, comprenant un détecteur de niveau monté sur un support venant se fixer sur la citerne de sorte que le détecteur soit placé dans le compartiment à une hauteur maximale de remplissage admissible.

Le détecteur de niveau comporte un capteur de mesure comportant au moins deux jeux de plusieurs électrodes réalisées sous la forme de jeux indépendants de plaques métalliques séparés par une électrode séparatrice commune formée par l'une des plaques et au moins deux moyens de mesure de la permittivité diélectrique d'un fluide présent entre les électrodes, les jeux de plusieurs électrodes délimitant deux zones, la sonde comprenant des moyens pour tester le bon fonctionnement de toute la chaîne d'acquisition de la mesure de permittivité diélectrique du fluide présent au niveau des électrodes, caractérisée en ce que les moyens de mesure de la permittivité diélectrique sont incorporés dans la sonde, la sonde comprenant deux ensembles de mesure de niveau redondants formé chacun par un jeu de plaques métalliques associés chacun à un moyen de mesure.

La sonde selon l'invention permet ainsi d'assurer une mesure tridimensionnelle du niveau de liquide grâce aux électrodes qui sont avantageusement matérialisées par des plaques parallèles, et non pas une mesure monodimensionnelle comme c'est le cas lors de l'utilisation d'un capteur optique, et ce avec un niveau de fiabilité élevé.

Par exemple, la détection de niveau peut être basée sur une comparaison entre la mesure de permittivité diélectrique soit du gaz ambiant (capteur non mouillé), soit du liquide en cours de remplissage (capteur mouillé).

La sonde comporte des moyens pour tester le bon fonctionnement de toute la chaîne d'acquisition de la mesure de permittivité diélectrique du fluide présent au niveau des électrodes. Des moyens de comparaison de la mesure obtenue avec des valeurs de seuil sont mis en œuvre.

Selon une caractéristique de l'invention, les moyens pour tester le fonctionnement de la chaîne d'acquisition comprennent des moyens permettant de modifier périodiquement de manière déterministe la valeur de capacitance mesurée par le détecteur et des moyens de comparaison de la valeur de la mesure modifiée avec une valeur de seuil.

Par exemple, les moyens pour tester le fonctionnement de la chaîne d'acquisition comprennent des moyens pour raccorder périodiquement au moins un condensateur étalon aux électrodes.

Avantageusement, les moyens pour tester le fonctionnement de la chaîne d'acquisition sont des moyens de test automatiques.

L'invention a également pour objet, selon un deuxième aspect, un dispositif limiteur de remplissage pour citerne de transfert de carburant pétrolier liquide, comprenant un ensemble de sondes telles que définies ci-dessus, pour détecter un niveau de remplissage dans un ensemble de compartiments et un contrôleur de remplissage recevant un signal d'autorisation de remplissage émis par chaque sonde, pour piloter des actionneurs, de type pompe et vanne, d'un contrôleur de remplissage.

D'autres buts, caractéristiques et avantages de l'invention apparaîtront à la lecture de la description suivante, donnée uniquement à titre d'exemple non limitatif, et faite en référence aux dessins annexés sur lesquels :

- la figure 1 est une vue schématique d'un compartiment doté d'un dispositif limiteur de remplissage conforme à l'invention ;
- la figure 2 est un schéma synoptique d'un exemple de réalisation d'une sonde conforme à l'invention ;
- la figure 3 est une vue schématique en perspective d'un exemple de réalisation d'une sonde conforme à l'invention ; et
- la figure 4 illustre un autre mode de réalisation d'une sonde selon un exemple ne faisant pas partie de l'invention.

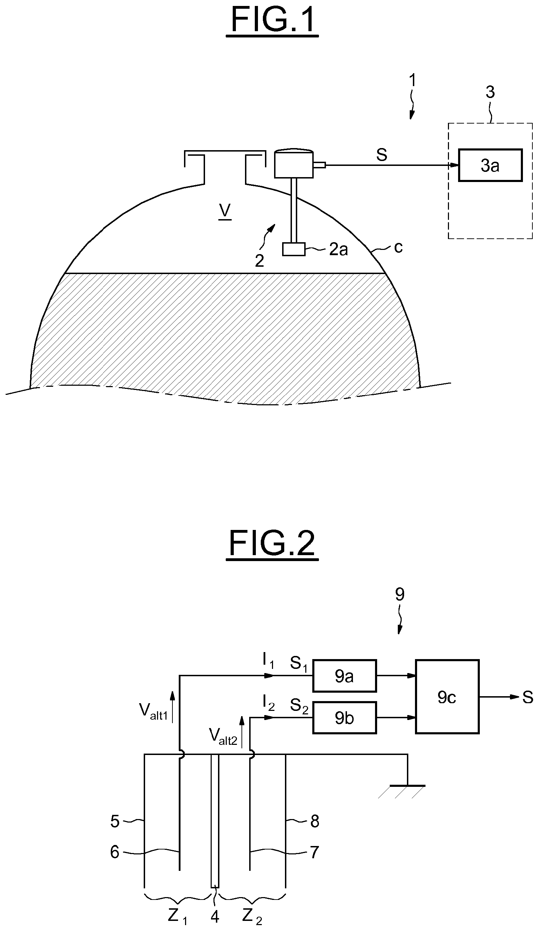

Le compartiment C illustré sur la figure 1 est par exemple un compartiment d'un véhicule citerne, utilisée pour le transport de carburant pétrolier liquide.

Dans l'exemple de réalisation illustré à la figure 1, un seul compartiment a été représenté. Une telle citerne peut comporter un à neuf compartiments de taille variable.

Comme on le voit, chaque compartiment C est doté d'un dispositif limiteur de remplissage afin de détecter tout risque de débordement en détectant le remplissage du compartiment jusqu'à une hauteur maximale de remplissage admissible qui, avantageusement, délimite un volume V d'accueil de sécurité, par exemple de l'ordre d'une centaine de litres.

Un tel volume d'accueil permet de tenir compte des temps d'arrêt des pompes et vannes d'un système de remplissage, lorsque la hauteur maximale est atteinte, afin d'éviter tout risque de débordement.

Le dispositif limiteur de remplissage, désigné par la référence numérique générale 1, comporte, pour chaque compartiment, un détecteur de niveau constitué par une sonde 2 qui assure la détection du niveau maximal de remplissage dans le compartiment C et qui est raccordée à un dispositif 3 de chargement de citernes de transport de carburant pétrolier liquide prévu au niveau du quai de chargement de camions citernes, comprenant un contrôleur de remplissage 3a constitué par un analyseur de sonde intégré au dispositif de chargement pour piloter le dispositif de chargement des citernes à partir des signaux issus des sondes 2.

La sonde 2 comprend un capteur de niveau 2a comportant des électrodes et des moyens de mesure de permittivité diélectrique du fluide entre les électrodes.

Toutefois, la sonde 2 visible sur la figure 2 est une sonde multizone et assure en conséquence des mesures d'impédance indépendantes et redondantes.

La sonde 2 comporte ainsi plusieurs jeux d'électrodes réalisées sous la forme de jeux indépendants de plaques métalliques, ici au nombre de deux, séparés par une électrode séparatrice 4 commune, formée par l'une des plaques, et délimitant deux zones Z1 et Z2. Dans le mode de réalisation illustré à la figure 2, la sonde comporte ainsi deux ensembles de mesure de niveau redondants, formés chacun par un jeu de plaques métalliques associés chacun à un moyen de mesure de permittivité diélectrique entre les plaques. Bien entendu, on pourra utiliser un nombre accru de zones de détection afin d'augmenter le nombre de mesures de niveau redondantes.

Chaque zone Z1 ou Z2 comporte trois plaques métalliques 5,6 et 4, d'une part et 4,7 et 8, d'autre part.

Ces plaques sont distantes l'une de l'autre de sorte qu'entre elles, des volumes de fluide, gaz ou liquide, peuvent circuler.

Chaque fluide possède une permittivité diélectrique relative au vide ($\varepsilon r$) qui lui est propre.

Par exemple, la permittivité de l'air est de 1,0005. Celle de l'huile ou des produits pétroliers est supérieure à 2. Celle de l'alcool est supérieure à 6. Enfin, la permittivité de l'eau est supérieure à 30.

La valeur du condensateur formé par les plaques parallèles et en vis-à-vis est donnée par la relation :

$$C = \varepsilon r \ x \ (S/e)$$

Avec :

S= surface des plaques conductrices en m² ; et
e=distance entre les plaques en m.

La valeur du condensateur formée par chaque couple de plaques est donnée en farads. Ainsi, en fonction de la géométrie des électrodes, on mesure une impédance qui est l'image de la permittivité diélectrique du milieu dans lequel se situent les électrodes.

L'agencement des jeux d'électrodes en vis-à-vis séparés par la plaque séparatrice 4 permet de créer des groupes indépendants de condensateurs de mesure fournissant des mesures elles-mêmes indépendantes.

La sonde 2 comprend un dispositif de calcul 9 intégrant les capteurs de mesure d'impédance indépendants. Il récupère les parties réelles et imaginaires des impédances du fluide présent dans les zones Z1 et Z2 et les compare avec des valeurs de seuil.

Comme on le voit, le dispositif de calcul 9 comporte deux unités centrales indépendantes 9a et 9b assurant chacune et en parallèle le traitement des signaux S1 et S2 de mesures indépendantes d'impédance. Les signaux traités sont fournis à un comparateur 9c qui assure la corrélation entre les valeurs d'impédances fournies. Il s'agit notamment de vérifier que l'écart entre les valeurs d'impédance obtenues pour chaque zone ne dépasse pas une valeur limite de seuil au-delà de laquelle on décide que la mesure de niveau n'est pas valable.

Lorsque la sonde détecte la présence d'un fluide dont la permittivité diélectrique correspond à celle d'un liquide et non à celle d'un gaz, le dispositif de calcul 9 met à jour le niveau d'un signal S d'autorisation ou d'interdiction de remplissage à destination du contrôleur de remplissage 3a.

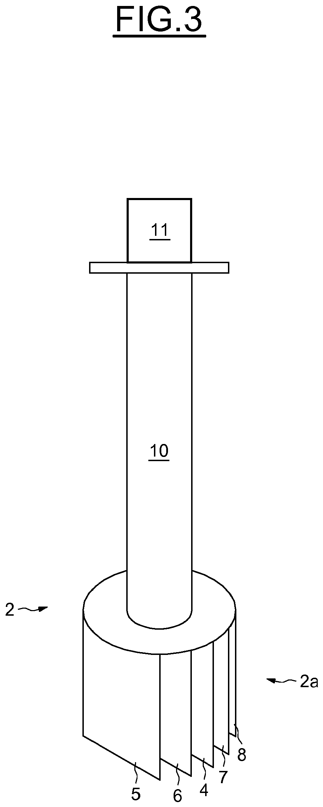

On a enfin représenté sur la figure 3 une vue schématique d'un exemple de réalisation d'une sonde conforme à l'invention.

Sur cette figure, on reconnaît les deux jeux de plaques 5, 6, 7 et 8 séparés par la plaque séparatrice 4.

Ces deux jeux de plaques sont montés sur un support en forme de tube 10, lui-même surmonté d'une tête 11 servant de relais de connexion pour le raccordement de la sonde avec le contrôleur de remplissage 3a.

Par exemple, l'unité centrale peut être réalisée sous la forme d'une carte électronique montée à l'intérieur du tube 10.

Un capot cylindrique (non représenté) laissant passer le fluide vient entourer les jeux de plaques afin de protéger mécaniquement ces dernières.

Comme illustré à la figure 1, l'ensemble vient se monter sur la citerne, à travers un orifice pratiqué dans la paroi de cette dernière, en partie haute, de sorte que le détecteur, et en particulier les électrodes, soit placé à la hauteur maximale de remplissage admissible.

On notera toutefois que l'invention n'est pas limitée au mode de réalisation décrit précédemment en référence aux figures 1 à 3.

En effet, alors que dans l'exemple de réalisation décrit précédemment la sonde 2 est une sonde multizone comportant plusieurs jeux d'électrodes réalisées sous la forme de jeux indépendants de plaques métalliques qui assure en conséquence des mesures d'impédance indépendantes et redondantes, on notera que l'on ne sort pas du cadre de l'invention lorsque la sonde effectue une mesure de niveau non redondante.

Ainsi, selon un autre aspect, la sonde assure une mesure de niveau unique.

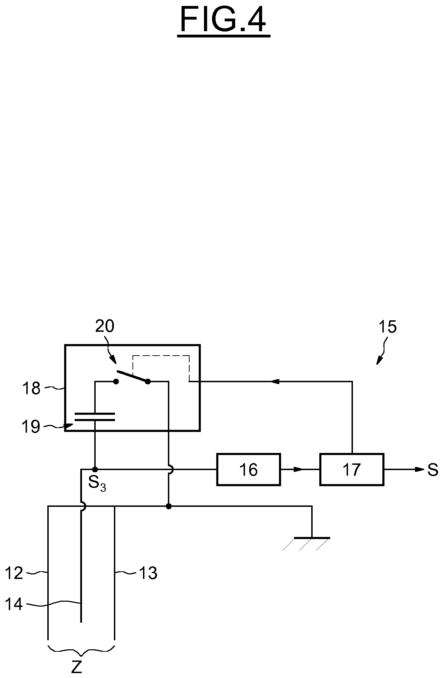

On a représenté sur la figure 4 un tel mode de réalisation ne faisant pas partie de l'invention.

La sonde 2 comporte ici un seul jeu d'électrodes réalisées sous la forme de plaques métalliques, ici au nombre de trois, référencées 12, 13 et 14, qui assurent une mesure dans une unique zone Z. La sonde est raccordée à un dispositif de calcul 15 qui, comme dans le mode de réalisation décrit précédemment, récupère les parties réelle et imaginaire de l'impédance du fluide présent dans la zone Z et les compare avec une valeur de seuil.

Le dispositif de calcul 15 intègre des moyens de mesure 16 de la permittivité diélectrique du fluide présent entre les électrodes, qui récupèrent le signal S3 fourni par les plaques et assurent le traitement de ce signal pour mesurer l'impédance du fluide entre les électrodes. Le signal traité est fourni à une unité centrale 17 qui compare la mesure de permittivité diélectrique avec un ou plusieurs seuils, afin de déterminer si le fluide présent entre les électrodes est un liquide ou un gaz.

L'unité centrale 17 met à jour le niveau d'un signal S d'autorisation ou d'interdiction de remplissage à destination du contrôleur de remplissage 3a (figure 1).

Avantageusement, une telle sonde est complétée par des moyens 18 pour tester le fonctionnement de la chaîne d'acquisition de la mesure réalisée par la sonde, comprenant les électrodes et les moyens de mesure 16.

Ces moyens de test 18 sont destinés à appliquer dynamiquement, périodiquement, et de manière automatisée sous le contrôle de l'unité centrale 17, à la source de la mesure, à savoir aux électrodes, un élément étalon de référence apte à modifier la mesure de manière déterministe. L'unité centrale compare alors la mesure de permittivité modifiée avec une valeur de seuil pour contrôler le bon fonctionnement de la chaîne d'acquisition.

Comme on le voit, les moyens de test 18 sont réalisés sous la forme d'un ou de plusieurs condensateurs 19, sélectivement connectés entre les électrodes 13 et 14 au moyen d'un commutateur 20 piloté par l'unité centrale 17.

Si la mesure obtenue lors du raccordement du condensateur n'est pas égale à une valeur attendue, qui correspond à la valeur à vide augmentée d'une valeur connue issue du condensateur étalon, l'unité centrale en déduit qu'au moins un élément de la chaîne d'acquisition de la sonde n'est pas conforme aux spécifications attendues. La sonde est alors positionnée dans un mode « défaut » et le dispositif de chargement de citerne est mis en sécurité par désactivation du signal S d'autorisation ou d'interdiction de remplissage à destination du contrôleur de remplissage 3a.

Bien entendu, un tel mode de réalisation pourrait également être envisagé dans des sondes dans lesquelles les mesures de niveaux sont redondantes.

**Revendications**

1.  Sonde pour dispositif limiteur de remplissage pour citerne de transport de carburant pétrolier liquide, comprenant un détecteur de niveau monté sur un support (10, 11) venant se fixer dans un compartiment (C) de la citerne de sorte que le détecteur soit placé dans le compartiment (C) à une hauteur maximale de remplissage admissible, le détecteur de niveau comportant un capteur (2a) de mesure comportant au moins deux jeux de plusieurs électrodes (5, 6, 4, 7, 8; 12, 13, 14), les jeux de plusieurs électrodes délimitant deux zones (Zl, Z2), la sonde comprenant des moyens (18) pour tester le bon fonctionnement de toute la chaîne d'acquisition de la mesure de permittivité diélectrique du fluide présent au niveau des électrodes, **caractérisée en ce que** les électrodes sont réalisées sous la forme de jeux indépendants de plaques métalliques séparés par une électrode séparatrice commune (4) formée par l'une des plaques et au moins deux moyens (9a, 9b; 16) de mesure de la permittivité diélectrique d'un fluide présent entre les électrodes sont incorporés dans la sonde, la sonde comprenant deux ensembles de mesure de niveau redondants formés chacun par un jeu de plaques métalliques associé chacun à un moyen de mesure.

2.  Sonde selon la revendication 1, dans laquelle les moyens (18) pour tester le fonctionnement de la chaîne d'acquisition comprennent des moyens (19, 20) pour modifier périodiquement de manière déterministe la valeur de capacitance mesurée par le détecteur et des moyens (17) de comparaison de la valeur de la mesure modifiée avec une valeur de seuil.

3.  Sonde selon l'une des revendications 1 et 2, dans laquelle les moyens pour tester le fonctionnement de la chaîne d'acquisition comprennent des moyens (20) pour raccorder périodiquement au moins un condensateur étalon (19) aux électrodes.

4.  Sonde selon l'une la revendication 3, dans laquelle les moyens pour tester le fonctionnement de la chaîne d'acquisition sont des moyens de test automatiques.

5.  Dispositif limiteur de remplissage pour citerne de transfert de carburant pétrolier liquide, comprenant un ensemble de sondes selon l'une quelconque des revendications 1 à 4, pour détecter un niveau de remplissage dans un ensemble de compartiments (C) de ladite citerne et un contrôleur de remplissage (3a) recevant un signal d'autorisation de remplissage émis pour chaque sonde, pour piloter des actionneurs de type pompe et vanne d'un contrôleur de remplissage (3).

**Patentansprüche**

1.  Sonde für eine Füllbegrenzungsvorrichtung für eine Transportzisterne für flüssigen Kraftstoff auf Erdölbasis, einen Füllstanddetektor umfassend, der auf einer Halterung (10, 11) angebracht ist, der in einem Fach (C) der Zisterne fixiert wird, sodass der Sensor in dem Fach (C) auf einer maximalen zulässigen Füllhöhe platziert ist, wobei der Füllstanddetektor einen Messsensor (2a) beinhaltet, der mindestens zwei Sätze mit mehreren Elektroden (5, 6, 4, 7, 8; 12, 13, 14) beinhaltet, wobei die Sätze mit mehreren Elektroden zwei Zonen (Z1, Z2) begrenzen, wobei die Sonde Mittel (18) zum Testen des korrekten Betriebs der gesamten Erfassungskette der dielektrischen Leitfähigkeit der im Bereich der Elektroden vorhandenen Flüssigkeit umfasst, **dadurch gekennzeichnet, dass** die Elektroden in Form von unabhängigen Sätzen von Metallplatten gefertigt sind, die durch eine gemeinsame Trennelektrode (4) getrennt sind, die durch eine der Platten gebildet wird, und zwei Mittel (9a, 9b; 16) zum Messen der dielektrischen Leitfähigkeit einer zwischen den Elektroden vorhandenen Flüssigkeit in der Sonde eingearbeitet sind, wobei die Sonde zwei redundante Füllstandmesseinheiten umfasst, die jeweils durch einen Satz an Metallplatten gebildet werden, der jedem der Messmittel zugeordnet ist.

2.  Sonde nach Anspruch 1, wobei die Mittel (18) zum Testen des Betriebs der Erfassungskette Mittel (19, 20) zum periodischen Ändern in deterministischer Form des durch den Detektor gemessenen Kapazitätswertes, und Mittel (17) zum Vergleichen des geänderten Werts der Messung mit einem Schwellenwert umfassen.

3.  Sonde nach einem der Ansprüche 1 und 2, wobei die Mittel zum Testen des Betriebs der Erfassungskette Mittel (20) zum periodischen Anschließen mindestens eines Eichkondensators (19) an die Elektroden umfassen.

4.  Sonde nach einem dem Anspruch 3, wobei die Mittel zum Testen des Betriebs der Erfassungskette automatische Testmittel sind.

**5.** Füllbegrenzungsvorrichtung für eine Übertragungszisterne für flüssigen Kraftstoff auf Erdölbasis, eine Einheit an Sonden nach einem der Ansprüche 1 bis 4 umfassend, um einen Füllstand in einer Einheit an Fächern (C) der Zisterne zu detektieren, und einen Füllcontroller (3a), der ein Freigabesignal zum Füllen empfängt, das für jede Sonde ausgegeben wird, um die Aktoren vom Typ Pumpe und Ventil eines Füllcontrollers (3) anzusteuern.

controller (3a) receiving a filling authorisation signal emitted for each probe, to control actuators of the pump and valve type of a filling controller (3).

**Claims**

**1.** A probe for fill limiting device for liquid petroleum fuel transport tank, comprising a level detector mounted on a support (10, 11) which is fixed in a compartment (C) of the tank so that the detector is placed in the compartment (C) at a maximum permissible filling height, the level detector including a measuring sensor (2a) including at least two sets of several electrodes (5, 6, 4, 7, 8; 12, 13, 14),
the sets of several electrodes delimiting two areas (ZI, Z2), the probe comprising means (18) for testing the proper operation of the entire acquisition chain of the measurement of dielectric permittivity of the fluid present at the electrodes, **characterised in that** the electrodes are made in the form of independent sets of metal plates separated by a common separating electrode (4) formed by one of the plates and at least two means (9a, 9b; 16) for measuring the dielectric permittivity of a fluid present between the electrodes are incorporated in the probe, the probe comprising two redundant level measuring assemblies each formed by a set of metal plates each associated with a measuring means.

**2.** The probe according to claim 1, wherein the means (18) for testing the operation of the acquisition chain comprise means (19, 20) for periodically modifying in a deterministic manner the capacitance value measured by the detector and means (17) for comparing the value of the modified measurement with a threshold value.

**3.** The probe according to one of claims 1 and 2, wherein the means for testing the operation of the acquisition chain comprise means (20) for periodically connecting at least one standard capacitor (19) to the electrodes.

**4.** The probe according to claim 3, wherein the means for testing the operation of the acquisition chain are automatic test means.

**5.** Fill limiting device for liquid petroleum fuel transfer tank, comprising a set of probes according to any one of claims 1 to 4, for detecting a filling level in a set of compartments (C) of said tank and a filling

# FIG.1

# FIG.2

# FIG.3

# FIG.4

## RÉFÉRENCES CITÉES DANS LA DESCRIPTION

**Documents brevets cités dans la description**

- DE 4115207 A1